# EUROPÄISCHE PATENTSCHRIFT

(11) **EP 1 339 588 B1**
(45) Veröffentlichungstag und Bekanntmachung des Hinweises auf die Patenterteilung: **03.08.2005**
(21) Anmeldenummer: 01994628.4
(22) Anmeldetag: 30.10.2001
(51) Int. Cl.: B60T 13/74, F16D 65/36

(54) **BREMSAKTUATOR**
BRAKE ACTUATOR
ACTIONNEUR DE FREIN

(30) Priorität: 28.11.2000 DE 10058925
(43) Veröffentlichungstag der Anmeldung: 03.09.2003
(73) Patentinhaber: KNORR-BREMSE Systeme für Schienenfahrzeuge GmbH, 80809 München (DE)
(72) Erfinder: GRUNDWÜRMER, Richard, 85057 Ingolstadt (DE); STALTMEIR, Josef, 80807 München (DE); VOHLA, Manfred, 80995 München (DE)
(86) Internationale Anmeldenummer: PCT/EP2001/012519
(87) Internationale Veröffentlichungsnummer: WO 2002/044002

(56) Entgegenhaltungen:
- US-A- 4 546 298
- US-A- 4 784 244

## Beschreibung

### Stand der Technik

Die Erfindung geht aus von einem Bremsaktuator, insbesondere für eine Schienenfahrzeugbremse, nach der Gattung des Patentanspruchs 1.

Im wesentlichen werden derzeit im Schienenfahrzeugbereich drei Bremssysteme eingesetzt : Pneumatische oder elektro-pneumatische Bremssysteme, hydraulische oder elektro-hydraulische Bremssysteme sowie mechanische oder elektro-mechanische Bremssysteme. Das Bremssystem kann dabei als aktives oder passives Bremssystem ausgeführt sein, je nachdem ob die Kraft des Bremsaktuators zum Einbremsen (aktives Bremssystem) oder zum Lösen der Bremse (passives Bremssystem) aufgebracht werden muß. Für den Fall von Betriebsstörungen erfolgt bei pneumatischen Systemen eine Energiespeicherung in Druckluftbehältern, bei hydraulischen Systemen in Hydrobehältern und bei mechanischen Systemen in Form von Speicherfedern.

Aus der US-A-4 546 298 ist eine elektro-mechanische Schienenfahrzeugbremse bekannt, welche eine Betriebsbremseinheit sowie eine Speicherbremseinheit mit einem Energiespeicher aufweist. Die Betriebsbremseinheit beinhaltet einen Bremskrafterzeuger zum Zuspannen und/oder Lösen der Bremse, beispielsweise in Form eines elektromotorischen Antriebs. Die Speicherbremseinheit umfaßt mindestens einen Energiespeicher zum Speichern und Abgeben von Energie zum Zuspannen der Bremse als betriebliche Notbremse im Sinne einer unterlegten Sicherheitsebene bei Ausfall der Betriebsbremseinheit und/oder als Park- oder Feststellbremse. Die Speicherbremseinheit ist im allgemeinen als Federspeicherbremse ausgebildet. Ein Kraftumsetzer sorgt für eine Umsetzung der vom Bremskrafterzeuger und/oder vom Energiespeicher abgegebenen Energie in eine Bremszuspannbewegung und umfaßt beispielsweise eine vom elektromotorischen Antrieb getriebene Bremsspindel.

Da die gesamte Bremskraft bzw. die gesamte Lösekraft durch den elektromotorischen Antrieb als Bremskrafterzeuger aufgebracht wird, muß dieser auf ein hohes Ausgangsmoment ausgelegt werden. Hierdurch baut der Bremskrafterzeuger relativ groß und ist deshalb auch relativ schwer und teuer.

Die US-A-4 784 244 beschreibt einen elektrisch betätigbaren Bremsaktuator mit einer Speicherfeder, die im Betriebsbremsfall einen Anteil der Bremskraft aufbaut.

Der vorliegenden Erfindung liegt die Aufgabe zugrunde, einen Bremsaktuator der eingangs erwähnten Art zu schaffen, der kompakt und kostengünstig aufgebaut ist. Erfindungsgemäß wird diese Aufgabe durch die kennzeichnenden Merkmale von Anspruch 1 gelöst.

### Vorteile der Erfindung

Weil der weitere Energiespeicher in Form der Speicherfeder und der Bremskrafterzeuger derart ausgelegt sind, daß die vom Bremskrafterzeuger bei einer Bremsung aufzubringende Kraft zur Erzeugung einer definierten Bremskraft in einem definierten Betriebspunkt, welche größer als Null und kleiner als die maximale Bremskraft ist, Null beträgt, braucht der Bremskrafterzeuger im definierten Betriebspunkt keine zusätzliche Bremskraft erzeugen. Die Bremskraft wird dann vielmehr durch die Speicherfeder alleine erzeugt. Zum Erreichen einer maximalen Bremskraft unterstützt der Bremskrafterzeuger die Speicherfeder, zur Erzeugung kleinerer Bremskräfte wirkt der Bremskrafterzeuger der Kraft der Speicherfeder entgegen. Der Bremskrafterzeuger wirkt daher lediglich als unterstützender Antrieb in beiden Lastrichtungen sowohl zum Anlegen der maximalen Bremskraft als auch zum Lösen der Bremse. Damit kombiniert das System wichtige Vorteile eines passiven Bremssystems mit denen eines aktiven Bremssystems. Jedoch kann die Speicherfeder zur Bremszuspannung kleiner ausfallen als bei einem rein passiven Bremssystem, da sie die maximale Bremskraft nicht alleine, sondern nur zusammen mit dem Bremskrafterzeuger aufbringen muss. Andererseits kann aber auch der Bremskrafterzeuger, beispielsweise ein Elektromotor, kleiner als bei rein aktiven Bremssystemen dimensioniert werden, da auch er die Bremskraft nicht alleine sondern zusammen mit der Speicherfeder erzeugt.

Weil die Speicherfeder gemeinsam mit dem einen Energiespeicher im Notbrems- und/oder Feststellbremsfall in Bremszuspannrichtung aktivierbar ist, trägt sie nicht nur bei Betriebs- sondern auch bei Feststell- und/oder Notbremsungen zur Bremskrafterzeugung bei, weswegen nicht nur der Bremskrafterzeuger, sondern auch der eine Energiespeicher kleiner dimensioniert werden kann. Darüber hinaus erhöht sich die Sicherheit, da durch die Speicherfeder als weiterer Energiespeicher eine Redundanz bei Feststell- und/oder Notbremsungen gegeben ist.

Die Speicherfeder ist in Bezug zum Bremskrafterzeuger und zu dem einen Energiespeicher mechanisch parallel geschaltet und im Betriebsbremsfall zusammen mit dem Bremskrafterzeuger in Bremszuspannrichtung betätigbar. Die Speicherfeder ist dann derart ausgelegt, daß mit ihr bei nicht aktivem Bremskrafterzeuger eine definierte, vorzugsweise eine mittlere Bremskraft erzeugt werden kann.

Durch die in den Unteransprüchen aufgeführten Maßnahmen sind vorteilhafte Weiterbildungen und Verbesserungen des im Patentanspruch 1 angegebenen Bremsaktuators möglich.

In bevorzugender Weise ist die Speicherfeder als radial äußere Speicherfeder ausgebildet, welche eine radial innere Speicherfeder umschließt, die den einen Energiespeicher bildet, wodurch eine besonders platzsparende Anordnung gegeben ist.

### Zeichnungen

Ein Ausführungsbeispiel der Erfindung ist in den Zeichnungen dargestellt und in der nachfolgenden Beschreibung näher erläutert. Es zeigen :
Fig.1 eine Schnittdarstellung einer bevorzugten Ausführungsform eines erfindungsgemäßen Bremsaktuators in Lösestellung;
Fig.2 den Bremsaktuator von Fig.1 in einer Betriebsbremsstellung;
Fig.3 den Bremsaktuator von Fig.1 in einer Not- oder Feststellbremsstellung;
Fig.4 den Bremsaktuator von Fig.1 in einer stark schematisierten Darstellung.

### Beschreibung des Ausführungsbeispiels

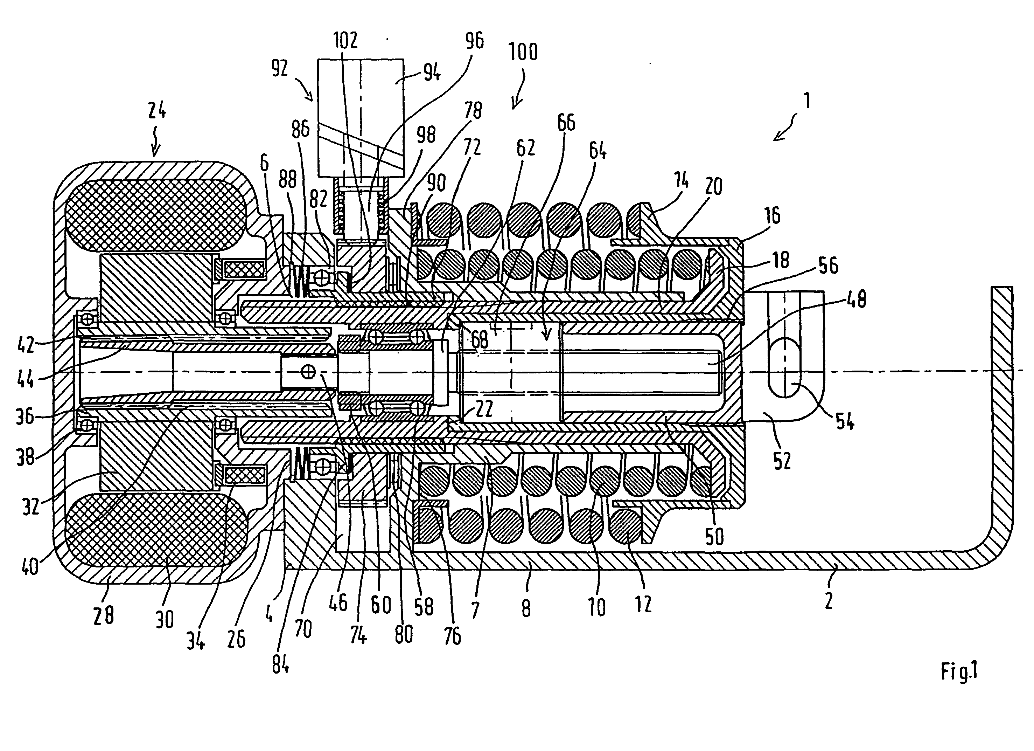

Die in Fig.1 insgesamt mit 1 bezeichnete und in einer Lösestellung gezeigte bevorzugte Ausführungsform eines Bremsaktuators dient als Antriebseinheit einer elektromechanischen Bremszuspanneinrichtung eines Schienenfahrzeugs. Der Bremsaktuator 1 hat ein im wesentlichen hohlzylindrisches, in Fig.1 abgebrochen dargestelltes Aktuatorgehäuse 2, das zu einem axialen Ende hin von einem Deckelabschnitt 4 abgeschlossen wird, welcher eine zentrische Bohrung 6 aufweist. Ausgehend vom Deckelabschnitt 4 ist das Aktuatorgehäuse 2 im wesentlichen doppelwandig ausgebildet, wobei in dem Raum zwischen einer inneren Wandung 7 und einer äußeren Wandung 8 eine innere Speicherfeder 10 und eine hierzu koaxiale äußere Speicherfeder 12 angeordnet sind, wobei die äußere Speicherfeder 12 die innere Speicherfeder 10 umschließt.

Die Speicherfedern 10, 12 sind vorzugsweise als Schraubenfedern ausgebildet und stützen sich jeweils mit ihrem einen Ende am Deckelabschnitt 4 ab. Die äußere Speicherfeder 12 stützt sich mit ihrem anderen Ende auf einem Ringkragen 14 einer äußeren Schiebehülse 16, die innere Speicherfeder 10 mit ihrem anderen Ende auf einem Ringkragen 18 einer inneren Schiebehülse 20 ab, wobei die innere Schiebehülse 20 der äußeren Schiebehülse 16 und der inneren Wandung 7 des Aktuatorgehäuses 2 zwischengeordnet ist. Ferner sind die innere und die äußere Schiebehülse 16, 20 in axialer Richtung aneinander und die innere Schiebehülse 20 an einer radial inneren Umfangsfläche der inneren Wandung 7 des Aktuatorgehäuses 2 verschieblich geführt, wobei die äußere Schiebehülse 16 in der Lösestellung an einem axialen Anschlag 22 der inneren Schiebehülse 20 zur Anlage kommt. Ferner überragt der Ringkragen 14 der äußeren Schiebehülse 16 den Ringkragen 18 der inneren Schiebehülse 20 in axialer und radialer Richtung.

An den Deckelabschnitt 4 ist an der von den Speicherfedern 10, 12 abgewandten Seite ein im Vierquadrantenbetrieb betreibbarer Motor, vorzugsweise ein SR-Motor 24 (switched reluctance motor) angeflanscht, wobei ein axialer Ringvorsprung 26 des Motorgehäuses 28 in der Bohrung 6 des Deckelabschnitts 4 zentriert ist. Der SR-Motor 24 beinhaltet einen radial äußeren, gehäusefesten Stator 30, welcher einen Rotor 32 umschließt, der mittels einer Haltebremse 34, vorzugsweise einer Permanentmagnetbremse abbremsbar ist, welche stromlos geschlossen und bestromt geöffnet ist. Der Rotor 32 sitzt auf einer Hohlwelle 36, die über Kugellager 38 im Motorgehäuse 28 drehbar gelagert und an ihrer radial inneren Umfangsfläche mit einer axial verlaufenden Keilwellenverzahnung 40 versehen ist, in welche radial äußere und in Axialrichtung verlaufende Flügel 42 einer Zwischenhülse 44 eingreifen. Infolgedessen ist die Zwischenhülse 44 relativ zur Hohlwelle 36 unverdrehbar aber axial verschieblich geführt.

Ein endseitiger Zapfen 46 einer Bremsspindel 48 ragt koaxial in ein den Speicherfedern10, 12 zugewandtes Ende der Zwischenhülse 44 und ist dort dreh- und axialfest gehalten. Das andere Ende der Bremsspindel 48 ragt in einen becherförmigen Abschnitt 50 eines Pleuels 52 für einen nicht dargestellten Exzenterwellenhebel hinein. Hierzu hat der Pleuel 52 endseitig ein Langloch 54, in welches ein den Exzenterwellenhebel haltender Kraftmeßbolzen eingreifen kann. Der Exzenterwellenhebel wirkt auf eine aus Maßstabsgründen nicht dargestellte Bremszange. Der becherförmige Abschnitt 50 des Pleuels 52 ist in der äußeren Schiebehülse 16 gehalten und mit dieser beispielsweise durch ein Gewinde 56 verbunden.

Die Bremsspindel 48 ist innerhalb der inneren Schiebehülse 20 drehbar gelagert, vorzugsweise mittels eines zweireihigen Rillenkugellagers 58, welches sowohl Axial- als auch Radialkräfte aufnehmen kann und von welchem ein Innenring durch eine auf einen Außengewindeabschnitt der Bremsspindel 48 aufgeschraubte Mutter 60 gegen eine Schulter 62 der Bremsspindel 48 gespannt und dadurch an der Bremsspindel 48 dreh- und axialfest gehalten. Ein Außenring des Rillenkugellagers ist in der inneren Schiebehülse 20 ebenfalls dreh- und axialfest gehalten.

Die Bremsspindel 48 ist von einer Mutter/Spindelbaueinheit 64 umfaßt, die vorzugsweise als Wälzegewindetrieb wie beispielsweise Kugelumlaufspindel, Rollengewindetrieb, Gewinderollenschraubtrieb oder als Planeten-Wälzgewindetrieb ausgebildet sein kann. Der becherförmige Abschnitt 50 des Pleuels 52 ist dabei in die äußere Schiebehülse 16 soweit eingeschraubt, daß die Mutter 66 der Mutter/Spindelbaueinheit 64 zwischen einem radial inneren Ansatz 68 der äußeren Schiebehülse 16 und einer Stirnfläche des becherförmigen Abschnitts 50 des Pleuels 52 eingespannt ist, so daß sie sich diesem gegenüber verdrehsicher gehalten ist. Bei Drehungen der Bremsspindel 48 wird daher die Mutter 66 entlang der Bremsspindel 48 translatorisch geführt und nimmt dabei die äußere Schiebehülse 16 und den Pleuel 52 mit.

Im Deckelabschnitt 4 des Aktuatorgehäuses 2 ist ein Ringraum 70 ausgebildet, in welchem ein auf einer Verriegelungsmutter 72 sitzendes Zahnrad 74 koaxial zur Bremsspindel 48 aufgenommen ist. Eine vom Ringraum 70 weg weisende Fläche 76 einer radial verlaufenden, den Ringraum 70 begrenzenden Wand 78 des Deckelabschnitts 4 bildet die Stützfläche für jeweils ein Ende der inneren und äußeren Speicherfeder 10, 12. An der anderen, zum Ringraum 70 weisenden Fläche dieser Wand ist eine Ringausnehmung vorhanden, in welcher ein Axialnadellager 80 gehalten ist, durch welches das Zahnrad 74 gegenüber dem Aktuatorgehäuse 2 axial gelagert ist. Andererseits ist die Verriegelungsmutter 72 auf der vom Axialnadellager 80 wegweisenden Seite des Zahnrades 74 durch ein radiales Rillenkugellager 82 relativ zum Aktuatorgehäuse 2 gelagert, wobei ein Innenring des Rillenkugellagers gegen einen Absatz 84 der Verriegelungsmutter 72 mittels einer Feder 86 gespannt ist, welche durch einen im Aktuatorgehäuse 2 sitzenden Sprengring 88 lagegesichert ist. Durch die Wirkung der Feder 86 ist das Zahnrad 74 daher zwischen dem Absatz 84 der Verriegelungsmutter 72 und dem Axialnadellager 80 kraftschlüssig gehalten.

Die Verriegelungsmutter 72 umschließt die innere Schiebehülse 20 und ist auf dieser mittels eines nicht-selbsthemmenden Gewindes 90 drehbar gelagert. Außerdem ist eine magnetische Verriegelungsvorrichtung 92 mit einer Spule 94 und einem in Bezug zum Zahnrad 74 radial betätigbaren Verriegelungskolben 96 vorgesehen, wobei der Verriegelungskolben 96 bei bestromter Spule 94 gegen die Wirkung einer Rückholfeder 98 in Umfangsrichtung gesehen zwischen die Zähne des Zahnrades 74 greift und es hierdurch in seiner Drehstellung relativ zur inneren Schiebehülse 20 arretiert. Demgegenüber wird der Verriegelungskolben 96 von der Rückholfeder 98 bei unbestromter Spule 94 radial zurückgezogen und läßt eine freie Drehung des Zahnrades 74 gegenüber der inneren Schiebehülse 20 zu.

Der SR-Motor 24 bildet einen Bremskrafterzeuger, die weiteren Elemente des Kraftübertragungsweges vom SR-Motor 24 bis zur Bremszange einen Bremskraftumsetzer 100. Besonders bevorzugt wird als Bremskrafterzeuger ein Elektromotor 24 eingesetzt. Alternativ könnte der Bremskrafterzeuger aber auch ein in eine oder zwei Betätigungsrichtungen wirkender hydraulischer oder pneumatischer Bremszylinder sein oder eine andere in eine oder zwei Richtungen wirkende Einheit. Die Verriegelungsvorichtung 92, die Permanentmagnetbremse 34 und der SR-Motor 24 sind von einer nicht dargestellten elektronischen Steuer- und Regeleinrichtung ansteuerbar. Vor diesem Hintergrund hat der Bremsaktuator 1 folgende Funktion :

In der in Fig.1 gezeigten Lösestellung des Bremsaktuators 1 sind die äußere und die innere Speicherfeder 10, 12 vorgespannt. Die Kraft der inneren Speicherfeder 10 wird von der inneren Schiebehülse 20 über das nicht-selbsthemmende Gewinde 90 auf die Verriegelungsmutter 72 und von dort über das Zahnrad 74 auf den ausgefahrenen Kolben 96 der Verriegelungsvorrichtung 92 übertragen. Infolge der Federkraft wird in dem nicht-selbsthemmenden Gewinde 90 ein Drehmoment erzeugt, d.h. das Zahnrad 74 möchte sich zusammen mit der Verriegelungsmutter 72 drehen, was aber durch den ausgefahrenen Kolben 96 der Verriegelungsvorrichtung 92 verhindert wird.

Die Kraft der äußeren Speicherfeder 12 wird von der äußeren Schiebehülse 16 an der Mutter 66 der Mutter/Spindelbaueinheit 64 abgestützt, obwohl die Mutter/Spindelbaueinheit 64 nicht-selbsthemmend ist. Denn das infolge der Kraft der äußeren Speicherfeder 12 in der Bremsspindel 48 entstehende Drehmoment wird über die in Lösestellung geschlossene Permanentmagnetbremse 34 in das Aktuatorgehäuse 2 eingeleitet. Von der Mutter 66 läuft der Kraftfluß über die Bremsspindel 48 und das zweireihige Rillenkugellager 58 in die innere Schiebehülse 20 und nimmt von dort aus den gleichen Weg in das Zahnrad 74 wie die Kraft der inneren Speicherfeder 10. Das bedeutet, daß in Lösestellung sowohl die äußere wie auch die innere Speicherfeder 10, 12 von der Verriegelungsvorrichtung 92 in gespanntem Zustand gehalten werden.

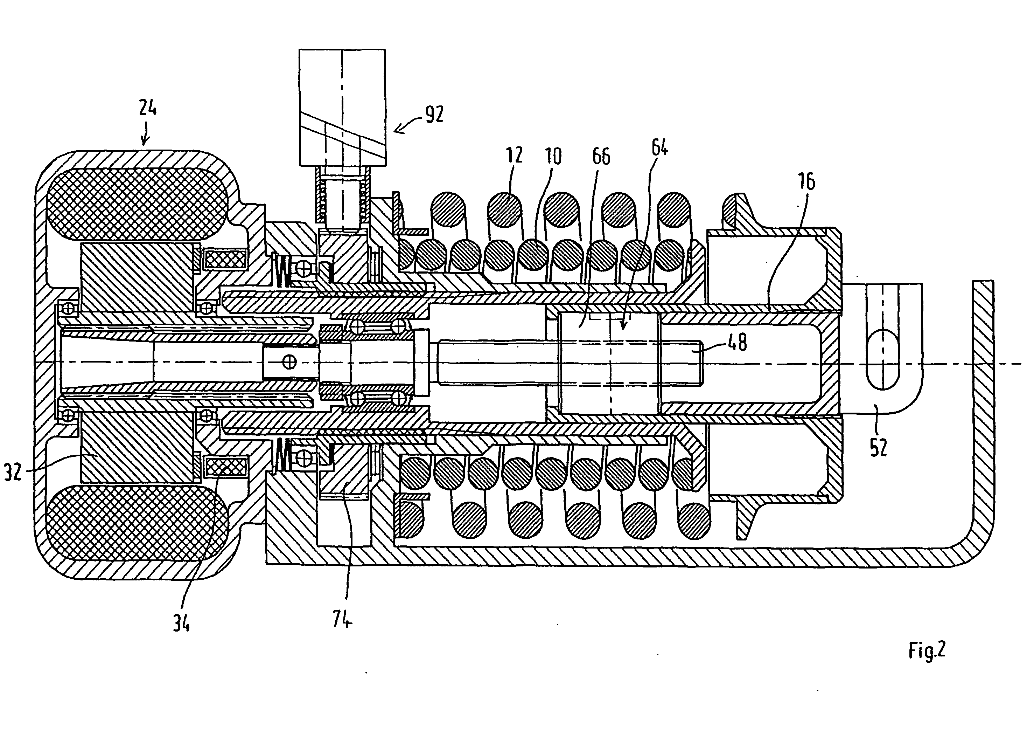

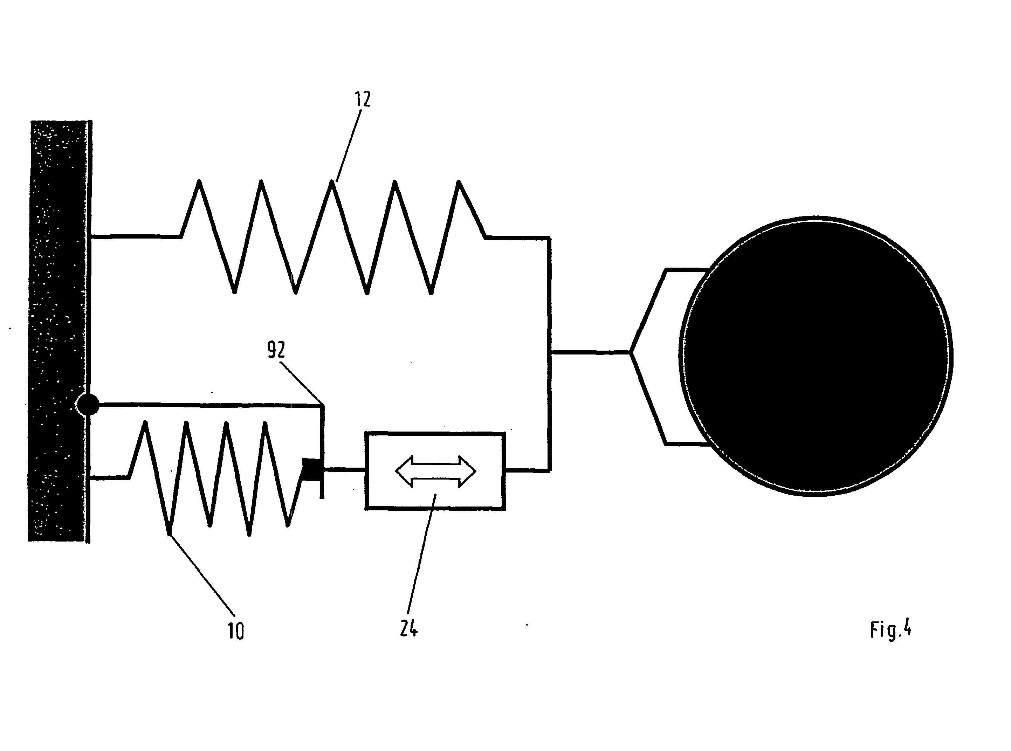

Beim Übergang von der Lösestellung zur einer Betriebsbremsung wird die Permanentmagnetbremse 34 durch die elektronische Steuer- und Regeleinrichtung bestromt, dadurch öffnet die Bremse 34 und ermöglicht eine Drehung des SR-Motors 24, welcher von der Steuer- und Regeleinrichtung ebenfalls mit elektrischer Energie versorgt wird. Durch die Drehung des Rotors 32 und der Bremsspindel 48 wird die Mutter 66 der Mutter/Spindelbaueinheit 64 zusammen mit der äußeren Schiebehülse 16 und dem Pleuel 52 in die in Fig.2 dargestellte, ausgefahrene Betriebsbremsstellung bewegt. Diese Ausfahrbewegung des Pleuels 52 wird von der äußeren Speicherfeder 12 unterstützt, welche funktionsbezogen dem SR-Motor 24 parallelgeschaltet ist, wie in schematisierter Weise Fig.4 veranschaulicht.

Die Ansteuerung des SR-Motors 24 durch die Steuer- und Regeleinrichtung und die äußere Speicherfeder 12 sind dabei derart aufeinander abgestimmt, daß die äußere Speicherfeder 12 alleine einen definierten Bremskraftwert erzeugt, welcher zwischen einer minimalen und einer maximalen Bremskraft liegt und einen Betriebsnullpunkt definiert. Der SR-Motor 24 ist im Betriebsnullpunkt stromlos geschaltet. Die Größe der im Betriebsnullpunkt wirkenden Bremskraft ist daher unter anderem abhängig von der Federrate der äußeren Speicherfeder 12 und dem Grad der Vorspannung. Zum Erreichen der maximalen Bremskraft wird der SR-Motor 24 durch die Steuer- und Regeleinrichtung im Vierquadrantenbetrieb so gesteuert, daß er die äußere Speicherfeder 12 durch Drehen in Bremszuspannrichtung und durch Abgabe eines positiven Moments unterstützt, was beispielsweise einem Betrieb im ersten Quadranten entspricht. Zum Erreichen einer Bremskraft kleiner als im Betriebsnullpunkt dreht der SR-Motor 24 entgegen der Bremszuspannrichtung und liefert ein negatives Drehmoment, welches über die Mutter/Spindelbaueinheit 64 gegen die äußere Speicherfeder 12 wirkt (Betrieb im dritten Quadranten). Die innere Speicherfeder 10 ist bei der Erzeugung der Betriebsbremskraft nicht beteiligt und verbleibt in gespanntem Zustand, da sich das Zahnrad 74 durch die weiterhin verriegelte Verriegelungsvorrichtung 92 in Sperrstellung befindet.

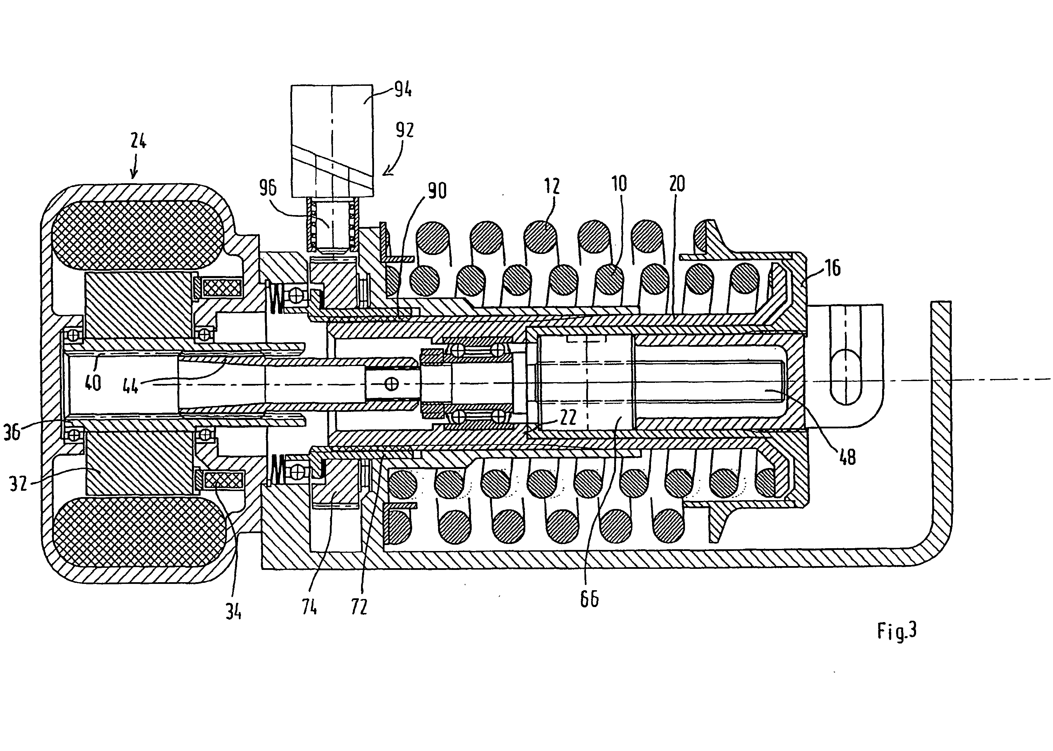

Das Einlegen der Feststellbremse wird eingeleitet durch die oben beschriebene Betriebsbremsung bis zum Erreichen einer Bremskraft, die etwa 20% geringer ist als die mit der Feststellbremse zu erzielende Endkraft. Durch entsprechende Steuersignale der Steuereinrichtung wird der SR-Motor 24 stillgelegt, die Permanentmagnetbremse 34 durch Unterbrechung der Stromzufuhr in Bremsstellung gebracht und die Verriegelungsvorrichtung 92 durch Abschalten der Bestromung gelöst. Diese Situation ist in Fig.3 dargestellt. Aufgrund der auf die innere Schiebehülse 20 wirkenden, von der inneren Speicherfeder 10 erzeugten Federkraft wird in dem nicht-selbsthemmenden Gewinde 90 zwischen der Verriegelungsmutter 72 und der inneren Schiebehülse 20 ein Drehmoment erzeugt, welches vom eingefahrenen Verriegelungskolben 96 nicht mehr abgestützt wird. Folglich beginnt die Verriegelungsmutter 72 auf der inneren Schiebehülse 20 zu rotieren, welche sich daraufhin in Bremszuspannrichtung bewegt und über ihren axialen Anschlag 22 die äußere Schiebehülse 16 mit dem Pleuel 52 mitnimmt. Gleichzeitig kann sich die entriegelte äußere Schiebehülse 16 aufgrund der Federkraft der äußeren Speicherfeder 12 in Bremszuspannrichtung bewegen. Dabei ist unerheblich, ob die Permanentmagnetbremse 34 geöffnet oder geschlossen ist, da sich die Zwischenhülse 44 zusammen mit der Bremsspindel 48 bei diesem Vorgang in der Keilwellenverzahnung 40 der Hohlwelle 36 des Rotors 32 axial verschiebt, wie Fig.3 zeigt. In der Feststellbremsstellung wirkt daher eine Gesamtbremskraft, welche sich aus der Summe der Federkräfte der beiden parallel wirkenden Speicherfedern 10, 12 ergibt. Dieser Sachverhalt ist auch anhand Fig.4 ersichtlich, wobei nach Lösen der als Kipphebel dargestellten Verriegelungsvorrichtung 92 die innere Speicherfeder 10 zusammen mit der äußeren Speicherfeder 12 die Bremskraft am Bremsbacken aufbaut. Die gesamte Energieversorgung kann dann abgeschaltet werden und das Schienenfahrzeug ist durch die Federkräfte der inneren und äußeren Speicherfeder 10, 12 zuverlässig in Feststellbremsstellung gehalten. Um die dadurch erzielte Feststellbremskraft über einen längeren Zeitraum aufrecht zu erhalten, darf bei der inneren und der äußeren Speicherfeder 10, 12 nur geringe Relaxation zugelassen werden.

Falls die Stromversorgung des Bremsaktuators 1 und/oder die Steuer- und Regeleinrichtung bei einer Betriebsbremsung ausfällt, wird die Spule 94 der Verriegelungsvorichtung 92 nicht mehr bestromt, so daß der Verriegelungskolben 96 das Zahnrad 74 freigibt. Die daran anschließenden Ereignisse sind identisch mit den zuvor anläßlich einer Feststellbremsung beschriebenen, so daß auch für den Fall einer Not- oder Sicherheitsbremsung sich die Gesamtbremskraft aus einer Summe der Federkräfte der beiden parallel wirkenden Speicherfedern 10, 12 ergibt.

Das Lösen der Bremse ausgehend von der Feststellbrems- oder Notbremsstellung erfolgt in zwei Schritten, wobei zunächst die innere Speicherfeder 10 gespannt wird. Die Permanentmagnetbremse 34 wird von der Steuer- und Regeleinrichtung bestromt und damit geöffnet und der SR-Motor 24 wird in Bremszuspannrichtung angetrieben. Dabei stützt sich die drehende Bremsspindel 48 an der Mutter 66 der Mutter/Spindelbaueinheit 64 ab und bewegt sich zusammen mit der inneren Schiebehülse 20 in Richtung auf die Lösestellung zu. Dabei rotiert die Verriegelungsmutter 72 auf der inneren Schiebehülse 20 bei geöffneter Verriegelungsvorrichtung 92. Dies ist jedoch auch bei geschlossener Verriegelungsvorrichtung 92 durch einen Freilauf 102 zwischen der Verriegelungsmutter 72 und dem Zahnrad 74 möglich. Der Freilauf 102 läßt ein Drehen der Verriegelungsmutter 72 gegenüber dem Zahnrad 74 beim Spannen der inneren Speicherfeder 10 zu. In Gegenrichtung ist ein Verdrehen nicht möglich. Bei Erreichen des gespannten Zustands der inneren Speicherfeder 10, welche dem Zustand in der Lösestellung entspricht, wird der SR-Motor 24 durch die Steuer- und Regeleinrichtung gestoppt und durch Bestromen der Spule 94 der Verriegelungskolben 96 in Verriegelungstellung gebracht.

In einem weiteren Schritt wird die äußere Speicherfeder 12 gespannt, indem der SR-Motor 24 in Gegendrehrichtung, d.h. in Löserichtung betrieben wird, wobei sich die Bremsspindel 48 an der verriegelten inneren Schiebehülse 20 abstützt durch ihre Drehung die Mutter 66 der Mutter/Spindelbaueinheit 64 zusammen mit der äußeren Schiebehülse 16 in Richtung auf die Lösestellung zu schraubt. Anschließend wird der SR-Motor 24 abgeschaltet und die Permanentmagnetbremse 34 durch Unterbrechung der Stromzufuhr ins Bremsstellung gebracht.

### Bezugszahlenliste

- 1: Bremsaktuator
- 2: Aktuatorgehäuse
- 4: Deckelabschnitt
- 6: Bohrung
- 7: innere Wandung
- 8: äußere Wandung
- 10: innere Speicherfeder
- 12: äußere Speicherfeder
- 14: Ringkragen
- 16: äußere Schiebehülse
- 18: Ringkragen
- 20: innere Schiebehülse
- 22: axialer Anschlag
- 24: SR-Motor
- 26: Ringvorsprung
- 28: Motorgehäuse
- 30: Stator
- 32: Rotor
- 34: Haltebremse
- 36: Hohlwelle
- 38: Kugellager
- 40: Keilwellenverzahnung
- 42: Flügel
- 44: Zwischenhülse
- 46: Zapfen
- 48: Bremsspindel
- 50: becherförmiger Abschnitt
- 52: Pleuel
- 54: Langloch
- 56: Gewinde
- 58: Rillenkugellager
- 60: Mutter
- 62: Schulter
- 64: Mutter/Spindelbaueinheit
- 66: Mutter
- 68: Ansatz
- 70: Ringraum
- 72: Verriegelungsmutter
- 74: Zahnrad
- 76: Stützfläche
- 78: Wand
- 80: Axialnadellager
- 82: Rillenkugellager
- 84: Absatz
- 86: Feder
- 88: Sprengring
- 90: Gewinde
- 92: Verriegelungsvorrichtung
- 94: Spule
- 96: Verriegelungskolben
- 98: Rückholfeder
- 100: Bremskraftumsetzer
- 102: Freilauf

## Patentansprüche

1. Bremsaktuator, insbesondere für eine Schienenfahrzeugbremse, mit
a) einer Betriebsbremseinheit mit einem Bremskrafterzeuger (24) zum Zuspannen und/oder Lösen der Bremse,
b) einer Speicherbremseinheit mit einem Energiespeicher (10) zum Speichern und Abgeben von Energie zum Zuspannen der Bremse als betriebliche Notbremse und/oder als Feststellbremse,
c) einem Kraftumsetzer (100) zur Umsetzung der vom Bremskrafterzeuger (24) und/oder vom Energiespeicher (10) abgegebenen Energie in eine Bremszuspannbewegung,
d) einem weiteren, mindestens eine Speicherfeder (12) umfassenden Energiespeicher zum Speichern und Abgeben von Energie zum Zuspannen der Bremse,
**dadurch gekennzeichnet daß**
e) die wenigstens eine Speicherfeder (12) dem Bremskrafterzeuger (24) und dem einen Energiespeicher (10) mechanisch parallel geschaltet ist, wobei
f) der Bremskrafterzeuger (24) und die Speicherfeder (12) derart aufeinander abgestimmt sind, daß bei einer Betriebsbremsung
- die Speicherfeder (12) allein eine definierte Bremskraft zwischen einer minimalen und einer maximalen Bremskraft erzeugt, oder
- die Speicherfeder (12) und der Bremskrafterzeuger (24) in Kraftaddition eine Bremskraft größer als die definierte Bremskraft erzeugen, oder
- die Speicherfeder (12) und der Bremskrafterzeuger (24) in Kraftsubtraktion eine Bremskraft kleiner als die definierte Bremskraft erzeugen, und wobei
g) die Speicherfeder (12) gemeinsam mit dem einen Energiespei-cher (10) im Notbrems- und/oder Feststellbremsfall in Bremszuspannrichtung aktiviert wird.

2. Bremsaktuator nach Anspruch 1, **dadurch gekennzeichnet, daß** der Bremskrafterzeuger ein im Vierquadrantenbetrieb betreibbarer Elektromotor (24) ist.

3. Bremsaktuator nach Anspruch 2, **dadurch gekennzeichnet, daß** die Speicherfeder eine radial äußere Speicherfeder (12) ist, welche eine radial innere Speicherfeder (10) des einen Energiespeichers umschließt.

4. Bremsaktuator nach Anspruch 3, **dadurch gekennzeichnet, daß** sich das eine Ende der inneren Speicherfeder (10) und das eine Ende der äußeren Speicherfeder (12) an einem Aktuatorgehäuse (2) und das andere Ende der inneren Speicherfeder (10) an einer inneren Schiebehülse (20) und das andere Ende der äußeren Speicherfeder (12) an einer äußeren Schiebehülse (16) abstützt.

5. Bremsaktuator nach Anspruch 4, **dadurch gekennzeichnet, daß** die innere und die äußere Schiebehülse (16, 20) koaxial zueinander angeordnet und in axialer Richtung aneinander verschieblich geführt sind, wobei die äußere Schiebehülse (16) an einem axialen Anschlag (22) der inneren Schiebehülse (20) gegen die Bremszuspannrichtung zur Anlage bringbar ist.

6. Bremsaktuator nach Anspruch 5, **dadurch gekennzeichnet, daß** die äußere Schiebehülse (16) mit einem Pleuel (52) zur Aufbringung von Zuspannkraft auf eine Bremszange in Verbindung steht.

7. Bremsaktuator nach Anspruch 6, **dadurch gekennzeichnet, daß** der Elektromotor (24) mit der inneren Speicherfeder (10) mechanisch in Reihe und mit der äußeren Speicherfeder (12) mechanisch parallel geschaltet ist.

8. Bremsaktuator nach Anspruch 7, **dadurch gekennzeichnet, daß** der Kraftumsetzer (100) eine Mutter/Spindelbaueinheit (64) mit einer Bremsspindel (48) beinhaltet, an welche der Elektromotor (24) axial angesetzt ist, wobei die Mutter/Spindelbaueinheit (64) zur Umwandlung der Drehbewegungen des Elektromotors (24) in eine lineare Verschiebung der Bremsspindel (48) vorgesehen ist.

9. Bremsaktuator nach Anspruch 8, **dadurch gekennzeichnet, daß** die innere Speicherfeder (10) und die äußere Speicherfeder (12) koaxial zur Bremsspindel (48) angeordnet sind.

10. Bremsaktuator nach Anspruch 9, **dadurch gekennzeichnet, daß** dem Elektromotor (24) eine vorzugsweise als Permamentmagnetbremse (34) ausgebildete Haltebremse zugeordnet ist, welche stromlos geschlossen und bestromt geöffnet ist.

11. Bremsaktuator nach Anspruch 10, **dadurch gekennzeichnet, daß** durch die äußere Schiebehülse (16) eine Mutter (66) der Mutter/Spindelbaueinheit (64) drehfest gehalten ist.

12. Bremsaktuator nach Anspruch 11, **dadurch gekennzeichnet, daß** die Bremsspindel (48) in einer Hohlwelle (36) des Elektromotors (24) oder eines Getriebes axial verschieblich aber relativ zur Hohlwelle (36) unverdrehbar geführt ist.

13. Bremsaktuator nach Anspruch 12, **dadurch gekennzeichnet, daß** die Bremsspindel (48) innerhalb der inneren Schiebehülse (20) drehbar aber axialfest gelagert ist.

14. Bremsaktuator nach Anspruch 13, **dadurch gekennzeichnet, daß** er eine vorzugsweise elektromagnetisch betätigbare Verriegelungsvorrichtung (92) zur Verriegelung der axialen Position der inneren Schiebehülse (20) umfaßt.

## Claims

1. Brake actuator, specifically for a rail vehicle brake system, comprising
(a) a service brake unit including a braking-force generator (24) for applying and/or releasing the brake,
(b) a storage brake unit including an energy storage device (10) for storing and delivering energy for brake application as operational emergency brake and/or as parking brake,
(c) a power converter (100) for converting the energy delivered by said braking-force generator (24) and/or said energy storage device (10) into a brake application motion,
(d) a further energy storage device including at least one pre-loaded spring (12) for storing and delivering energy for brake application,
**characterised in that**
(e) said at least one pre-loaded spring (12) is mechanically connected in parallel with said braking-force generator (24) and said one energy storage device (10),
(f) wherein said braking-force generator (24) and said pre-loaded spring (12) are matched with each other in such a way that in the case of service brake application
- said pre-loaded spring (12) alone generates a defined braking force between a minimum and a maximum braking-force level, or
- with the addition of forces, said pre-loaded spring (12) and said braking-force generator (24) generate a braking force higher than said defined braking force, or
- with the subtraction of forces, said pre-loaded spring (12) and said braking-force generator (24) generate a braking force lower t han said defined braking force, and
(g) wherein said pre-loaded spring (12) is activated together with said one energy storage device (10) along the direction of brake application in the case of emergency and/or parking brake application.

2. Brake actuator according to Claim 1, **characterised in that** said braking-force generator is an electric motor (24) adapted to be operated in a four-quadrant mode.

3. Brake actuator according to Claim 2, **characterised in that** said pre-loaded spring is a radially outer pre-loaded spring (12) that includes a radially inner pre-loaded spring (10) of said one energy storage device.

4. Brake actuator according to Claim 3, **characterised in that** the first end of said inner pre-loaded spring (10) and the first end of said outer pre-loaded spring (12) are supported each on an actuator housing (2) whilst the other end of said inner pre-loaded spring (10) is supported on an inner sliding sleeve (20) and the other end of said outer pre-loaded spring (12) is supported on an outer sliding sleeve (16).

5. Brake actuator according to any of the Claims 2 to 4, **characterised in that** said inner and outer sliding sleeves (16, 20) are arranged in mutual coaxial relationship and are guided in the axial direction for sliding one along the other, with said outer sliding sleeve (16) being adapted to be carried into bearing engagement against an axial stop (22) of said inner sliding sleeve (20) in opposition to the direction of brake application.

6. Brake actuator according to any of the Claims 1 to 5, **characterised in that** said outer sliding sleeve (16) is connected to a connecting rod (52) for application of the brake-applying force on a brake calliper.

7. Brake actuator according to any of the Claims 1 to 5, **characterised in that** said electric motor (24) is mechanically connected in series relative to said inner pre-loaded spring (10) while it is mechanically connected in parallel with said outer pre-loaded spring (12).

8. Brake actuator according to any of the Claims 1 to 7, **characterised in that** said power converter (100) includes a nut/spindle component (64) involving a brake spindle (48) to which said electric motor (24) is attached, with said nut/spindle component (64) being provided for converting the rotational movements of said electric motor (24) into a linear displacement of said brake spindle (48).

9. Brake actuator according to any of the Claims 1 to 8, **characterised in that** said inner pre-loaded spring (10) and said outer pre-ioaded spring (12) are arranged in coaxial relationship with said brake spindle (48).

10. Brake actuator according to Claim 9, **characterised in that** a parking brake is associated with said electric motor (24), which is preferably configured as permanent-magnet brake (34) that is closed when it is not supplied with current and that is opened when it is live.

11. Brake actuator according to any of the Claims 9 or 10, **characterised in that** a nut (66) of said nut/spindle component (64) is held by said outer sliding sleeve (16) so as to inhibit rotation.

12. Brake actuator according to any of the Claims 1 to 11, **characterised in that** said brake spindle (48) is guided in a hollow shaft (36) of said electric motor (24) or a gear set for axial displacement, however in a manner not permitting rotation relative to said hollow shaft (36).

13. Brake actuator according to Claim 12, **characterised in that** said brake spindle (48) is supported inside said inner sliding sleeve (20) for rotation, however in a manner not permitting axial movement.

14. Brake actuator according to Claim 13, **characterised in that** it comprises a locking device (92) preferably adapted to be electromagnetically actuated for locking the axial position of said inner sliding sleeve (20).

## Revendications

1. Actionneur de frein, notamment pour un frein de véhicule sur rail, comprenant
a) une unité de freinage de service ayant un générateur (24) de force de freinage pour serrer et/ou desserrer le frein ;
b) une unité de freinage à accumulateur comprenant un accumulateur (10) d'énergie pour accumuler et céder de l'énergie pour serrer le frein en tant que frein de secours en service et/ou en tant que frein d'arrêt ;
c) un convertisseur (100) de force pour transformer en un mouvement de serrage du frein l'énergie cédée par le générateur (24) de force de freinage et/ou par l'accumulateur (10) d'énergie ;
d) un autre accumulateur d'énergie comprenant au moins un ressort (12) accumulateur pour accumuler et céder de l'énergie pour serrer le frein, **caractérisé en ce que**
e) le au moins un ressort (12) accumulateur est monté mécaniquement en parallèle au générateur (24) de force de freinage et à l'accumulateur (10) d'énergie ;
f) le générateur (24) de force de freinage et le ressort (12) accumulateur étant adaptés l'un à l'autre de façon à ce que, lors d'un freinage de service,
- le ressort (12) accumulateur produit seul une force de freinage définie entre une force de freinage minimum et une force de freinage maximum, ou
- le ressort (12) accumulateur et le générateur (24) de force de freinage produisent par addition de forces une force de freinage plus grande que la force de freinage définie, ou
- le ressort (12) accumulateur et le générateur (24) de force de freinage produisent par soustraction de forces une force de freinage plus petite que la force de freinage définie, et
g) le ressort (12) accumulateur étant activé conjointement avec l'un des accumulateurs (10) d'énergie en cas de freinage d'urgence et/ou de frein d'arrêt dans le dispositif de serrage de frein.

2. Actionneur de frein suivant la revendication 1, **caractérisé en ce que** le générateur de force de freinage est un moteur (24) électrique pouvant fonctionner en fonctionnement dans quatre cadrans.

3. Actionneur de frein suivant la revendication 2, **caractérisé en ce que** le ressort accumulateur est un ressort (12) accumulateur extérieur radialement qui entoure un ressort (10) accumulateur intérieur radialement de l'un des accumulateurs d'énergie.

4. Actionneur de frein suivant la revendication 3, **caractérisé en ce que** l'une des extrémités du ressort (10) accumulateur intérieur et l'une des extrémité du ressort (12) accumulateur extérieur s'appuient sur un boîtier (2) d'actionneur et l'autre extrémité du ressort (10) accumulateur intérieur sur une douille (20) coulissante intérieure et l'autre extrémité du ressort (12) accumulateur extérieur sur une douille (16) coulissante extérieure.

5. Actionneur de frein suivant la revendication 4, **caractérisé en ce que** les douilles (16, 20) coulissantes intérieure et extérieure sont montées coaxialement l'une par rapport à l'autre et sont guidées à coulissement l'une sur l'autre dans la direction axiale, la douille (16) coulissante extérieure pouvant être amenée en contact avec une butée (22) axiale de la douille (20) coulissante intérieure à l'encontre du sens de serrage du frein.

6. Actionneur de frein suivant la revendication 5, **caractérisé en ce que** la douille (16) coulissante extérieure est en liaison avec une bielle (52) pour appliquer de la force de serrage à une pince de frein.

7. Actionneur de frein suivant la revendication 6, **caractérisé en ce que** le moteur (24) électrique est monté en série mécaniquement avec le ressort (10) accumulateur intérieur et en parallèle mécaniquement avec le ressort (12) accumulateur extérieur.

8. Actionneur de frein suivant la revendication 7, **caractérisé en ce que** le convertisseur (100) de force comporte une unité (64) de construction écrou/broche ayant une broche (48) de frein à laquelle le moteur (24) électrique est rattaché axialement, l'unité (64) de construction écrou/broche étant prévue pour transformer les mouvements de rotation du moteur (24) électrique en un coulissement linéaire de la broche (48) de frein.

9. Actionneur de frein suivant la revendication 8, **caractérisé en ce que** le ressort (10) accumulateur intérieur et le ressort (12) accumulateur extérieur sont disposés coaxialement à la broche (48) de frein.

10. Actionneur de frein suivant la revendication 9, **caractérisé en ce qu'**il est associé au moteur (24) électrique un frein de maintien qui est constitué, de préférence, en frein (34) à aimant permanent qui est fermé sans courant et qui est ouvert lorsqu'il est sous tension.

11. Actionneur de frein suivant la revendication 10, **caractérisé en ce qu'**un écrou (66) de l'unité (64) de construction écrou/broche est maintenu sans pouvoir tourner par la douille (16) coulissante extérieure.

12. Actionneur de frein suivant la revendication 11, **caractérisé en ce que** la broche (48) de frein est guidée à coulissement axial dans un arbre (36) creux du moteur (24) électrique ou d'une transmission, mais sans possibilité de tourner par rapport à l'arbre (36) creux.

13. Actionneur de frein suivant la revendication 12, **caractérisé en ce que** la broche (48) de frein est montée avec possibilité de tourner, mais fixe axialement, à l'intérieur de la douille (20) coulissante intérieure.

14. Actionneur de frein suivant la revendication 13, **caractérisé en ce qu'**il comprend un dispositif (92) de verrouillage pouvant être actionné, de préférence, par voie électromagnétique pour verrouiller la position axiale de la douille (20) coulissante intérieure.
